# EUROPEAN PATENT SPECIFICATION

(11) **EP 1 036 294 B1**
(45) Date of publication and mention of the grant of the patent: **05.06.2002**
(21) Application number: 98961161.1
(22) Date of filing: 09.11.1998
(51) Int. Cl.: F27D 3/02, F27D 5/00, C04B 35/18, C04B 35/56, C04B 38/00

(54) **CERAMIC MATERIALS FOR THE MANUFACTURE OF REFRACTORY ROLLERS AND OTHER SUPPORTS**
KERAMISCHE MATERIALIEN FÜR DIE HERSTELLUNG VON FEUERFESTEN ROLLEN UND ANDEREN TRÄGERN
MATERIAUX CERAMIQUES DESTINES A LA FABRICATION DE ROULEAUX REFRACTAIRES ET AUTRES SUPPORTS

(30) Priority: 26.11.1997 IT MI972625
(43) Date of publication of application: 20.09.2000
(73) Proprietor: ICRA S.p.A., 24060 San Paolo d'Argon (IT)
(72) Inventor: VALLE, Massimiliano, I-24100 Bergamo (IT); GANDOLFI, Renzo, I-24100 Bergamo (IT)
(74) Representative: Sgarbi, Renato
(86) International application number: EP9807140
(87) International publication number: WO9928690

(56) References cited:
- EP-A- 0 234 887
- WO-A-89/05285
- WO-A-95/33965
- PATENT ABSTRACTS OF JAPAN vol. 013, no. 275 (C-610), 23 June 1989 & JP 01 072961 A (NIPPON CEMENT CO LTD), 17 March 1989
- PATENT ABSTRACTS OF JAPAN vol. 015, no. 221 (C-0838), 6 June 1991 & JP 03 065555 A (MITSUBISHI MATERIALS CORP), 20 March 1991
- DATABASE COMPENDEX ENGINEERING INFORMATION, INC., NEW YORK, NY, US CHU MIN-CHEOL ET AL: "Strengthening of mullite by dispersion of carbide ceramics particles" XP002097279 & JSME INT J SER A;JSME INTERNATIONAL JOURNAL, SERIES A: MECHANICS AND MATERIAL ENGINEERING APR 1996 JSME, TOKYO, JAPAN, vol. 39, no. 2, April 1996, pages 259-265,

## Description

This invention relates to ceramic materials containing cordierite (Mg,Fe)₂Al₄Si₅O₁₈ together with "non-oxides", for example carbides and/or nitrides of various types intended, in particular, for the manufacture of refractory ceramic rollers and other extruded supports.

Roller kilns for firing tiles have been used with excellent results for about a quarter of a century. During the years technical improvements in the kiln structure and ceramic materials have enabled the roller diameter to be reduced (20-25 mm) and their length to be increased (up to 5 m), to achieve ever increasing production in such kilns. The main advantage of this technology is the high level of mechanization which can be applied in all processing stages of the material treated in these kilns.

This advantage results in remarkable economical and operating benefits. Roller kilns are currently used not only for firing tiles but also for the most diverse applications and severe production conditions in terms of supported loads, such as the firing of sanitary appliances, stoneware pipes and clinker. In this type of kiln, the material to be fired slides on a bed of rollers driven to rotate about their axis. The material is hence conveyed as on a conveyor belt from the preheating region, where the temperature is gradually increased (for example to 800-1000°C) to those regions in which the temperature is a maximum (for example up to 900-1300°C), the material undergoing process transformation to reach the rapid cooling region, in which along just a few linear metres of kiln it is rapidly cooled, to reach the kiln exit region. All the refractory ceramics used in these kilns must possess adequate physical, chemical and mechanical characteristics for the particular use for which they are intended. for example, the basic requirements for the ceramic rollers used in these kilns include narrow dimensional tolerances, maintanance of rectilinearity in all kiln regions, good mechanical resistance to bending at high temperature, indeformability even if considerable temperature turbulence is present, good resistance to temperature change, and good chemical resistance in environments which are fairly aggressive because of the high temperature of the vapours present.

Ceramic products based on cordierite and/or mullite are known, in which these minerals are often associated with corundum, zirconium silicate and other synthetic phases known to the expert of the art. Cordierite and mullite are known to be used in those ceramics pertaining to the family of traditional acid and basic technical ceramics and are processed by classical firing techniques.

Finally, carbide and/or nitride-based ceramic products are known in which these phases are often associated with each other, with metals, with alloys and with other synthetic ceramic phases known to the expert of the art. These phases are known to be used to obtain ceramic materials pertaining to the family of so-called "non-oxides" and require particular control, both of their chemical composition and of the process parameters for manufacturing the ceramic products containing them.

International Application published under NO. WO-A-95/33965 teaches the mechanical assembly of two rollers wherein an external roller made of oxide type material is reinforced by an internal element made of non-oxide type material, the non-oxide type material and the oxide type material being, therefore, incorporated in two separate components.

Patent Abstract of Japan, vol. 013, N. 275, 23.06.1989, reporting a summary of JP-A-01072961, discloses the production of a press molded and sintered body formed by mixing mullite-based powders with powders and/or whiskers of non-oxide type such as SiC or Si₃N₄. The sintered body is then heat treated at 900-1550°C to modify its surface layer.

Said body is suitable for use, inter alia, as an engine member or as a roller of a roller hearth kiln."

In this description and in the subsequent claims, the term "ceramic material" means a synthetic material obtained by sintering inorganic powders at high temperature and having a prevalently crystalline structure comprising one or more phases, the term "ceramic product" means a manufactured product for industrial use having a piece-wise or powder granulate format consisting essentially of ceramic material, and the term "oxide" means any phase forming part of a chemically stable and inert ceramic material having a crystalline structure at temperatures between ambient temperature and those temperatures at which industrial kilns usually operate, and consisting of at least one metal, one semi-metal or one non-metal (S.I. Tompkieff, "A New Periodic Table of the Elements", London, Chapman and Hall, 1954) such as phosphorus, arsenic, carbon and selenium, bonded chemically to oxygen.

The scope of this definition includes for example silica and all those crystalline phases which mineralogically pertain to silicates (eg. mullite and cordierite), calcium and magnesium carbonates, spinel, calcium, magnesium and aluminium phosphates, corundum, zircon, rutile etc. A large series of materials which satisfy the aforesaid "oxide" definition can be obtained from the book by M. Fleisher and J.A. Mandarino "Glossary of Mineral Species 1991", 6th Ed. 1991, The Mineralogical Record Inc., Tucson.

In this description and in the subsequent claims, the term "non-oxide" identifies compounds of ionic, covalent or metallic type of crystalline structure, chemically stable and inert under industrial kiln operating conditions, which form at high temperature between carbon and metallic or semi-metallic elements (carbides), compounds of ionic, covalent or metallic type of crystalline structure, chemically stable and inert under industrial kiln operating conditions, which form at high temperature between nitrogen and metals or semi-metals (nitrides), and inert metals and/or metal alloys resistant to the high temperatures usually used in industrial kilns. Typical examples of carbides which can be used in the implementation of this invention are chromium, aluminium, silicon, titanium, iron, nickel, manganese, zirconium, vanadium, molybdenum, tantalum, boron and tungsten carbides. Typical examples of nitrides which can be used in the implementation of this invention are chromium, aluminium, silicon, titanium, zirconium, vanadium, molybdenum, tantalum and boron nitrides. Typical examples of metals which can be used in the implementation of this invention are aluminium and nickel. Typical examples of metal alloys which can be used in the implementation of this invention are alloys based on nickel or cobalt, cupro-nickel alloys, iron, magnesium and aluminium alloys, monel alloys and steels.

The term "oxide/non-oxide ceramic material" means a ceramic material in which at least one "oxide" (and hence, as stated heretofore, phases known to be used in the traditional technical ceramics industry) and at least one "non-oxide" (and hence phases known to be used in the advanced technical ceramics industry) are used jointly in predetermined ratios and processed such as to form a mixture of crystalline phases comprising at least one oxide and at least one non-oxide which constitutes the essential part of the ceramic material of which the ceramic products of this invention are composed. The term "essential part" identifies herein that portion of the ceramic material which is responsible for the particular physical, mechanical and chemical characteristics imparted to the ceramic products obtained by the methods of this invention.

In the composition of said products the phases forming the oxide/non-oxide ceramic materials can be accompanied by other phases subsidiary to said mixtures.

The presence of these subsidiary phases, which can be present in non-crystalline form (eg. vitreous), can be considered useful but not necessary in the implementation of this invention.

A typical example of a ceramic product formed in accordance with this invention can consist of a ceramic material comprising at least a phase of oxide type and at least a phase of non-oxide type formed from a mixture of cordierite and carbide (and/or nitride) optionally accompanied by one or more subsidiary phases.

This invention, when applied to the ceramic refractories field, enables a new range of ceramic products with special properties to be developed, able to solve not only the more common problems but also particularly severe technical ceramic problems such as high deformability of the refractory ceramic rollers in the rapid cooling region of roller kilns.

The main provision of this invention, which is based on the use of ceramic material in which at least a portion consists of a ceramic material comprising at least a phase of oxide type and at least a phase of non-oxide type enables ceramic products which are of innovative type in terms of their functional characteristics to be obtained, in particular refractory ceramic rollers for industrial firing kilns.

According to the method of this invention, using stoichiometric criteria, the mix of materials of oxide and non-oxide type to be processed to obtain a ceramic material comprising at least a phase of oxide type and at least a phase of non-oxide type in which the two types of components of the mixture are present in the desired proportions is firstly determined.

According to a preferred embodiment of the invention the ceramic material used to obtain the aforesaid ceramic products contains a portion of at least 50% of ceramic material comprising at least a phase of oxide type and at least a phase of non-oxide type, any remainder being formed of subsidiary phases as indicated heretofore.

The ceramic material comprising at least a phase of oxide type and at least a phase of non-oxide type preferably consists of cordierite (Mg,Fe)₂Al₄Si₅O₁₈ as the oxide, and silicon carbide and/or titanium and/or boron and/or silicon nitride as the non-oxide. The ratio of oxide to non-oxide can vary from 1:9 to 9:1 by weight, preferably from 1:3 to 3:1 by weight.

To produce ceramic products consisting entirely of two-phase ceramic material comprising at least a phase of oxide type and at least a phase of non-oxide type formed from cordierite (Mg₂Al₄Si₅O₁₈) and silicon carbide (SiC) in the following weight proportions: 30% cordierite-70% SiC, 50% cordierite-50% SiC and 70% cordierite-30% SiC, a mix must be prepared having the total chemical compositions expressed in Table 1. These can be achieved by inserting silicon carbide in the desired proportion into a mixture of traditional raw materials (talcs, chlorites, aluminas, clays, kaolins) which satisfy the chemical composition ratios given in Table 1. This ceramic material comprising at least a phase of oxide type and at least a phase of non-oxide type can be synthesized by firing procedures generally lasting from a few hours to 100 hours and can reach maximum temperatures of between 1100 and 1400°C.

**TABLE 1**

| Chemical composition (weight) | | | | | |
|---|---|---|---|---|---|
| | | SiC% | MgO% | SiO₂% | Al₂O₃% |
| A) | 30% cordierite - 70% SiC | 70 | 4.1 | 15.4 | 10.5 |
| B) | 50% cordierite - 50% SiC | 50 | 6.9 | 25.6 | 17.5 |
| C) | 70% cordierite - 30% SiC | 30 | 9.7 | 35.9 | 24.4 |

The mix preparation operations are effected in accordance with known methods in the technical branch to which this invention relates. For example, the raw materials defining the ceramic material composition are measured out and mixed by known methods, firstly dry and then wet, for a time sufficient to ensure homogenization. The mix obtained in this manner is then extruded into pieces of desired shape and length or cast or pressed. The pieces obtained in this manner are dried by placing them on suitable supports or frames in dryers at a temperature of the order of 100°C. The dried products are then placed in kilns for their firing. This latter is carried out by applying different temperature gradients and residence times at various temperatures, depending on the different products to be obtained and the different raw materials used, temperatures exceeding 1100°C being in any event always required.

By way of example, Table 2 shows the heat treatment times and relative temperatures of each of the mixtures A), B) and C) for obtaining ceramic products of the invention in the form of refractory ceramic rollers for industrial kilns.

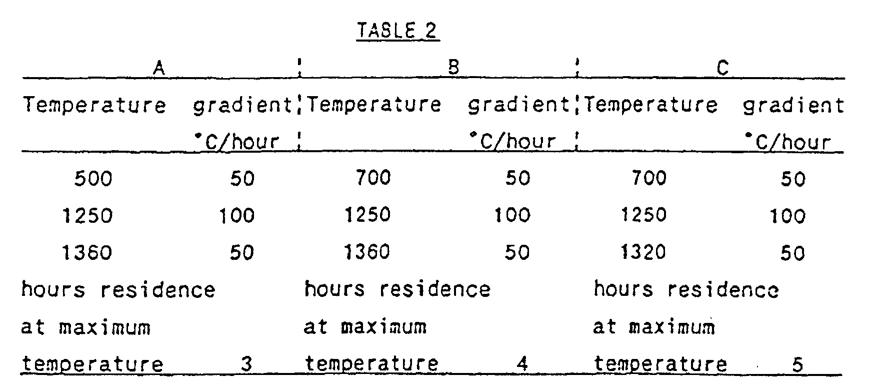

It should be noted that the conditions represented in Table 2 are suitable for forming ceramic products falling within the scope of this invention starting from materials of traditional type, and are purely indicative in that the specific conditions are determined in each particular case on the basis of the experience of the expert of the art and on the basis of the composition and chemical and physical characteristics of each material or combination of starting materials used and the composition of the final ceramic product to be obtained.

Particular attention must be dedicated to the process temperature in those cases in which alloys are used as non-oxide components of the ceramic material comprising at least a phase of oxide type and at least a phase of non-oxide type. If the alloy is the main component, the process temperatures must be very close to those of the metallurgical processes (eg. an aluminium alloy reinforced with silicon carbide). If the alloy is a secondary component the melting point can be exceeded to generate within the ceramic a molten phase which solidifies during cooling.

This invention, when applied to the field of refractory ceramics, enables a new range of materials with special properties to be developed, able to solve not only the more common problems but also particularly severe situations such as high deformability of the refractory ceramic rollers in the rapid cooling region of roller kilns.

The use of ceramic materials comprising at least a phase of oxide type and at least a phase of non-oxide type in the aforesaid applications constitutes the essential characteristic of the invention claimed herein, the scope of which also comprises the ceramic products obtained by this use and their manufacturing process.

## Claims

1. Use of ceramic materials comprising at least a phase of oxide type and at least a phase of non-oxide type for obtaining ceramic products consisting of extruded refractory ceramic rollers for industrial firing kilns, **characterized in that** the material of oxide type is cordierite and the material of non-oxide type is chosen from chromium, aluminium, silicon, titanium, iron, nickel, manganese, zirconium, vanadium, molybdenum, tantalum, boron and tungsten carbides, chromium, aluminium, silicon, titanium, zirconium, vanadium, molybdenum, tantalum and boron nitrides, metals such as aluminium and nickel, metal alloys based on nickel or cobalt, cupro-nickel alloys, iron, magnesium and aluminium alloys, monel alloys and steels.

2. Use of ceramic materials comprising at least a phase of oxide type and at least a phase of non-oxide type as claimed in claim 1, wherein the phases constituting said materials, optionally, are accompanied by other subsidiary phases, which can be present in crystalline or vitreous form.

3. Use of ceramic materials comprising at least a phase of oxide type and at least a phase of non-oxide type as claimed in claim 2, wherein the ceramic product obtained contains at least 50 wt% of said ceramic materials, the ratio of oxide to non-oxide varying from 1:9 to 9:1 by weight, preferably from 1:3 to 3:1 by weight.

4. Use of ceramic materials comprising at least a phase of oxide type and at least a phase of non-oxide type as claimed in claims 1 to 3, wherein said ceramic materials consist of cordierite as the oxide, and silicon carbide and/or titanium and/or boron and/or silicon nitride as the non-oxide.

5. An extruded refractory ceramic roller for industrial firing kilns comprising at least 50 wt% of ceramic materials comprising at least a phase of oxide type and at least a phase of non-oxide type **characterized in that** the material of oxide type is cordierite and the material of non-oxide type is chosen from chromium, aluminium, silicon, titanium, iron, nickel, manganese, zirconium, vanadium, molybdenum, tantalum, boron and tungsten carbides, chromium, aluminium, silicon, titanium, zirconium, vanadium, molybdenum, tantalum and boron nitrides, metals such as aluminium and nickel, metal alloys based on nickel or cobalt, cupro-nickel alloys, iron, magnesium and aluminium alloys, monel alloys and steels.

6. An extruded refractory ceramic roller of claim 5 wherein, the ratio of the oxide phase to the non-oxide phase (or phases) have a predetermined value varying within the range from 1:9 to 9:1 by weight, preferably from 1:3 to 3:1 by weight, said ceramic material comprising at least a phase of oxide type and at least a phase of non-oxide type optionally being accompanied by other subsidiary phases in crystalline and/or vitreous form.

7. An extruded refractory ceramic roller as claimed in claims 5 to 6, **characterised in that** the ceramic material comprising at least a phase of oxide type and at least a phase of non-oxide type consists of cordierite as the oxide, and silicon carbide and/or titanium and/or boron and/or silicon nitride as the non-oxide.

8. A process for preparing a ceramic product based on ceramic material comprising at least a phase of oxide type and at least a phase of non-oxide type and consisting of an extruded refractory ceramic roller for industrial firing kilns, comprising the steps of proportioning the raw materials defining the ceramic material, preparing the mix, shaping and heat treating the product, the material of oxide type being cordierite and the material of non-oxide type being chosed from chromium, aluminium, silicon, titanium, iron, nickel, manganese, zirconium, vanadium, molybdenum, tantalum, boron and tungsten carbides, chromium, aluminium, silicon, titanium, zirconium, vanadium, molybdenum, tantalum and boron nitrides, metals such as aluminium and nickel, metal alloys based on nickel or cobalt, cupro-nickel alloys, iron, magnesium and aluminium alloys, monel alloys and steels, **characterised in that** the starting materials for forming the oxide and non-oxide phases of the ceramic material comprising at least a phase of oxide type and at least a phase of non-oxide type are combined in quantities predetermined on the basis of their chemical composition, the chemical composition of the oxide phase and of the non-oxide phase (or phases) which are to constitute the ceramic material comprising at least a phase of oxide type and at least a phase of non-oxide type, and the respective proportions of these phases in said material.

9. A process as claimed in claim 8, wherein the raw materials are chosen from talc, chlorite, alumina, clay and kaolin, the oxide phase being formed from cordierite and the non-oxide phase consisting of silicon carbide, their ratio in the synthesized ceramic material varying from 1:3 to 3:1.

10. A process as claimed in claim 9, Wherein the duration of the firing stage varies from a few hours to 100 hours and the maximum temperature attained is between 1100 and 1450°C.

## Patentansprüche

1. Verwendung von Keramikmaterialien, die mindestens eine Phase des Oxid-Typs und mindestens eine Phase des Nicht-Oxid-Typs umfassen, um Keramikprodukte, die aus extrudierten hitzebeständigen Keramikwalzen für industrielle Brennöfen bestehen, zu erhalten, **dadurch gekennzeichnet, dass** das Material des Oxid-Typs Cordierit ist und das Material des Nicht-Oxid-Typs aus Chrom-, Aluminium-, Silicium-, Titan-, Eisen-, Nickel-, Mangan-, Zirkonium-, Vanadium-, Molybdän-, Tantal-, Bor- und Wolfram-Carbiden, Chrom-, Alumium-, Silicium-, Titan-, Zirkonium-, Vanadium-, Molybdän-, Tantalund Bor-Nitriden, Metallen wie z.B. Aluminium und Nickel, Metalllegierungen auf Nickel- oder Kobalt-Basis, Kupfer-Nickel-Legierungen, Eisen-, Magnesium- und Aluminium-Legierungen, Monel-Legierungen und Stählen ausgewählt ist.

2. Verwendung von Keramikmaterialien, die mindestens eine Phase des Oxid-Typs und mindestens eine Phase des Nicht-Oxid-Typs umfassen, nach Anspruch 1, wobei die Phasen, die diese Materialien bilden, gegebenenfalls mit anderen Nebenphasen verbunden sind, die in kristalliner oder glasartiger Form vorliegen.

3. Verwendung von Keramikmaterialien, die mindestens eine Phase des Oxid-Typs und mindestens eine Phase des Nicht-Oxid-Typs umfassen, nach Anspruch 2, wobei das erhaltene Keramikprodukt mindestens 50 Gew.-% der Keramikmaterialien enthält, das Gewichtsverhältnis von Oxid zu Nicht-Oxid zwischen 1:9 bis 9:1, vorzugsweise zwischen 1:3 und 3:1 variiert.

4. Verwendung von Keramikmaterialien, die mindestens eine Phase des Oxid-Typs und mindestens eine Phase des Nicht-Oxid-Typs umfassen, nach den Ansprüchen 1 bis 3, wobei die Keramikmaterialien aus Cordierit als das Oxid und Silicium-Carbid und/oder Titan- und/oder Bor- und/oder Silicium-Nitrid als das Nicht-Oxid bestehen.

5. Extrudierte hitzebeständige Keramikwalze für industrielle Brennöfen, umfassend mindestens 50 Gew.-% keramische Materialien, die mindestens eine Phase des Oxid-Typs und mindestens eine Phase des Nicht-Oxid-Typs umfassen, **dadurch gekennzeichnet, dass** das Material des Oxid-Typs Cordierit ist und das Material des Nicht-Oxid-Typs aus Chrom-, Aluminium-, Silicium-, Titan-, Eisen-, Nickel-, Mangan-, Zirkonium-, Vanadium-, Molybdän-, Tantal-, Bor- und Wolfram-Carbiden, Chrom-, Aluminium-, Silicium-, Titan-, Zirkonium-, Vanadium-, Molybdän-, Tantal- und Bor-Nitriden, Metallen wie Aluminium und Nickel, Metalllegierungen auf Nickel- oder Kobalt-Basis, Kupfer-Nickel-Legierungen, Eisen-, Magnesium- und Aluminium-Legierungen, Monel-Legierungen und Stählen ausgewählt ist.

6. Extrudierte hitzebeständige Keramikwalze nach Anspruch 5, in der das Gewichtsverhältnis der Oxid-Phase zu der Nicht-Oxid-Phase (oder -Phasen) einen vorbestimmten Wert hat, der im Bereich zwischen 1:9 und 9:1, vorzugsweise zwischen 1:3 und 3:1, bezogen auf das Gewicht, liegt, wobei das keramische Material, das mindestens eine Phase des Oxid-Typs und mindestens eine Phase des Nicht-Oxid-Typs umfasst, gegebenenfalls mit anderen Nebenphasen in kristalliner und/oder glasartiger Form verbunden ist.

7. Extrudierte hitzebeständige Keramikwalze nach Anspruch 5 oder Anspruch 6, **dadurch gekennzeichnet, dass** das keramische Material, das mindestens eine Phase des Oxid-Typs und eine Phase des Nicht-Oxid-Typs umfasst, aus Cordierit als das Oxid und Siliciumcarbid und/oder Titanund/oder Bor- und/oder Silicium-Nitrid als das Nicht-Oxid besteht.

8. Verfahren zur Herstellung eines Keramikproduktes auf der Basis von Keramikmaterial, das mindestens eine Phase des Oxid-Typs und mindestens eine Phase des Nicht-Oxid-Typs umfasst und das aus einer extrudierten hitzebeständigen Keramikwalze für industrielle Brennöfen besteht, umfassend die Stufen Proportionieren der Ausgangsmaterialien, die das Keramikmaterial definieren, Herstellen der Mischung, Formen und Hitzebehandeln des Produktes, wobei das Material des Oxid-Typs Cordierit ist und das Material des Nicht-Oxid-Typs aus Chrom-, Aluminium-, Silicium-, Titan-, Eisen-, Nickel-, Mangan-, Zirkonium-, Vanadium-, Molybdän-, Tantal-, Bor- und Wolfram-Carbiden, Chrom-, Aluminium-, Silicium-, Titan-, Zirkonium-, Vanadium-, Molybdän-, Tantal- und Bor-Nitriden, Metallen wie z.B. Aluminium und Nickel, Metalllegierungen auf Nickel- oder Kobalt-Basis, Kupfer-Nickel-Legierungen, Eisen, Magnesium- und Aluminium-Legierungen, Monel-Legierungen und Stählen ausgewählt wird, **dadurch gekennzeichnet, dass** die Ausgangsmaterialien zur Bildung der Oxid-Phase und der Nicht-Oxid-Phase des Keramikmaterials, das mindestens eine Phase des Oxid-Typs und mindestens eine Phase des Nicht-Oxid-Typs umfasst, in Mengen kombiniert werden, die auf der Basis ihrer chemischen Zusammensetzung, der chemischen Zusammensetzung der Oxid-Phase und der Nicht-Oxid-Phase (oder -Phasen), die das Keramikmaterial, das mindestens eine Phase des Oxid-Typs und mindestens eine Phase des Nicht-Oxid-Typs umfasst, bilden sollen und der jeweiligen Anteile dieser Phasen in dem Material vorher festgesetzt wurden, kombiniert werden.

9. Verfahren nach Anspruch 8, wobei die Ausgangsmaterialien aus Talk, Chlorit, Aluminiumoxid, Ton und Kaolin ausgewählt werden, wobei die Oxid-Phase aus Cordierit gebildet wird und die Nicht-Oxid-Phase aus Siliciumcarbid besteht, das Verhältnis derselben im synthetisierten Keramikmaterial zwischen 1:3 und 3:1 variiert.

10. Verfahren nach Anspruch 9, wobei die Dauer der Brennstufe zwischen wenigen Stunden und 100 Stunden variiert und das Temperaturmaximum zwischen 1100 und 1400°C erreicht wird.

## Revendications

1. Utilisation de matières céramiques comprenant au moins une phase de type oxyde et au moins une phase de type non oxyde pour obtenir des produits céramiques se composant de rouleaux de céramique réfractaire extrudés pour fours industriels, **caractérisée en ce que** la matière de type oxyde est la cordiérite et la matière de type non oxyde est choisie parmi les carbures de chrome, d'aluminium, de silicium, de titane, de fer, de nickel, de manganèse, de zirconium, de vanadium, de molybdène, de tantale, de bore et de tungstène, les nitrures de chrome, d'aluminium, de silicium, de titane, de zirconium, de vanadium, de molybdène, de tantale et de bore, les métaux tels que l'aluminium et le nickel, les alliages métalliques à base de nickel ou de cobalt, les alliages cuivre-nickel, le fer, les alliages de magnésium et d'aluminium, les alliages de Monel et les aciers.

2. Utilisation de matières céramiques comprenant au moins une phase de type oxyde et au moins une phase de type non oxyde selon la revendication 1, dans laquelle les phases constituant lesdites matières sont, éventuellement, accompagnées d'autres phases secondaires, qui peuvent être présentes sous une forme cristalline ou vitreuse.

3. Utilisation de matières céramiques comprenant au moins une phase de type oxyde et au moins une phase de type non oxyde selon la revendication 2, dans laquelle le produit céramique obtenu contient au moins 50 % en poids desdites matières céramiques, le rapport de l'oxyde au non-oxyde variant de 1:9 à 9:1 en poids, de préférence, de 1:3 à 3:1 en poids.

4. Utilisation de matières céramiques comprenant au moins une phase de type oxyde et au moins une phase de type non oxyde selon les revendications 1 à 3, dans laquelle lesdites matières céramiques se composent de cordiérite à titre de l'oxyde, et de carbure de silicium et/ou de nitrure de titane et/ou de bore et/ou de silicium à titre du non-oxyde.

5. Rouleau de céramique réfractaire extrudé pour fours industriels comprenant au moins 50 % en poids de matières céramiques comprenant au moins une phase de type oxyde et au moins une phase de type non oxyde, **caractérisé en ce que** la matière de type oxyde est la cordiérite et la matière de type non oxyde est choisie parmi les carbures de chrome, d'aluminium, de silicium, de titane, de fer, de nickel, de manganèse, de zirconium, de vanadium, de molybdène, de tantale, de bore et de tungstène, les nitrures de chrome, d'aluminium, de silicium, de titane, de zirconium, de vanadium, de molybdène, de tantale et de bore, les métaux tels que l'aluminium et le nickel, les alliages métalliques à base de nickel ou de cobalt, les alliages cuivre-nickel, le fer, les alliages de magnésium et d'aluminium, les alliages de Monel et les aciers.

6. Rouleau de céramique réfractaire extrudé selon la revendication 5, dans lequel le rapport de la phase oxyde à la phase non-oxyde (ou des phases) a une valeur prédéterminée variant dans la plage de 1:9 à 9:1 en poids, de préférence, de 1:3 à 3:1 en poids, ladite matière céramique comprenant au moins une phase de type oxyde et au moins une phase de type non oxyde étant, éventuellement, accompagnée d'autres phases secondaires présentes sous une forme cristalline et/ou vitreuse.

7. Rouleau de céramique réfractaire extrudé selon les revendications 5 et 6, **caractérisé en ce que** la matière céramique comprenant au moins une phase de type oxyde et au moins une phase de type non oxyde se compose de cordiérite à titre de l'oxyde, et de carbure de silicium et/ou de nitrure de titane et/ou de bore et/ou de silicium à titre du non-oxyde.

8. Procédé de préparation d'un produit céramique à base d'une matière céramique comprenant au moins une phase de type oxyde et au moins une phase de type non oxyde et se composant d'un rouleau de céramique extrudé pour fours industriels, comprenant les étapes consistant à doser les matières premières définissant la matière céramique, préparer le mélange, mettre en forme et chauffer le produit, la matière de type oxyde étant la cordiérite et la matière de type non oxyde étant choisie parmi les carbures de chrome, d'aluminium, de silicium, de titane, de fer, de nickel, de manganèse, de zirconium, de vanadium, de molybdène, de tantale, de bore et de tungstène, les nitrures de chrome, d'aluminium, de silicium, de titane, de zirconium, de vanadium, de molybdène, de tantale et de bore, les métaux tels que l'aluminium et le nickel, les alliages métalliques à base de nickel ou de cobalt, les alliages cuivre-nickel, le fer, les alliages de magnésium et d'aluminium, les alliages de Monel et les aciers, **caractérisé en ce que** les produits de départ destinés à former les phases oxyde et non-oxyde de la matière céramique comprenant au moins une phase de type oxyde et au moins une phase de type non oxyde sont combinés en des quantités prédéterminées sur la base de leur composition chimique, de la composition chimique de la phase oxyde et de la phase non-oxyde (ou des phases) qui doivent constituer la matière céramique comprenant au moins une phase de type oxyde et au moins une phase de type non oxyde, et les proportions respectives de ces phases dans ladite matière.

9. Procédé selon la revendication 8, dans lequel les matières premières sont choisies parmi le talc, la chlorite, l'alumine, l'argile et le kaolin, la phase oxyde étant formée à partir de cordiérite et la phase non-oxyde se composant de carbure de silicium, leur rapport dans la matière céramique de synthèse variant de 1:3 à 3:1.

10. Procédé selon la revendication 9, dans lequel la durée de l'étape de cuisson varie de quelques heures à 100 heures et la température maximale atteinte se situe entre 1100 et 1450°C.
